# EUROPÄISCHE PATENTSCHRIFT

(11) **EP 3 723 928 B1**
(45) Veröffentlichungstag und Bekanntmachung des Hinweises auf die Patenterteilung: **22.06.2022**
(21) Anmeldenummer: 18830173.3
(22) Anmeldetag: 12.12.2018
(51) Int. Cl.: B23D 21/10, H02G 1/12

(54) **SCHNEIDGERÄT ZUM ABLÄNGEN VON WELLROHREN SOWIE FÜHRUNGSVORSPRÜNGE IN EINEM SOLCHEN SCHNEIDGERÄT**
CUTTING DEVICE FOR CUTTING CORRUGATED PIPES TO LENGTH AND GUIDE PROJECTIONS IN SUCH A CUTTING DEVICE
DISPOSITIF DE COUPE POUR COUPER DES TUBES ONDULÉS À LONGUEUR ET GUIDAGE DES SAILLIES DANS UN TEL DISPOSITIF DE COUPE

(30) Priorität: 13.12.2017 DE 102017129725
(43) Veröffentlichungstag der Anmeldung: 21.10.2020
(73) Patentinhaber: Knipex-Werk C. Gustav Putsch KG, 42349 Wuppertal (DE)
(72) Erfinder: EISENHARDT, Daniel, 42349 Wuppertal (DE)
(74) Vertreter: Müller, Enno
(86) Internationale Anmeldenummer: PCT/EP2018/084561
(87) Internationale Veröffentlichungsnummer: WO 2019/115613

(56) Entgegenhaltungen:
- EP-A2- 1 295 688
- CH-A5- 682 471
- DE-A1- 2 159 744
- DE-U1-202014 101 596
- US-B1- 6 725 533

## Beschreibung

### Gebiet der Technik

Die Erfindung betrifft zunächst ein Schneidgerät zum Ablängen von Wellrohren, mit einem Schneidmaul, bestehend aus zwei Maulabschnitten, wobei beide Maulabschnitte jeweils eine Schneide und jeweils einen senkrecht zu der Schneide beabstandeten und gleichgerichtet zu der Schneide verlaufenden Führungsvorsprung aufweisen.

Wellrohre, insbesondere solche aus einem Kunststoffmaterial, finden bevorzugt Anwendung bei der Verlegung von elektrischen Leitungen oder dergleichen. Diese elektrischen Leitungen werden in dem Wellrohr angeordnet und sind so vor Verschmutzungen und mechanischen Beschädigungen geschützt.

### Stand der Technik

Um solche Wellrohre abzulängen, ist es bekannt, entsprechend ausgebildete Schneidgeräte zu nutzen. Hier wird beispielhaft auf die DE 29711 774 U1 verwiesen. Aus diesem Gebrauchsmuster ist ein Schneidgerät zum Ablängen von Wellrohren bekannt, welches zangenartig ausgebildet ist, mit zwei um eine Schwenkachse verschwenkbaren Maulabschnitten, in welchen jeweils eine Schneide und ein Führungsvorsprung angeordnet sind, und zwei Griffschenkeln, die sich von den Maulabschnitten aus betrachtet, jenseits der Schwenkachse erstrecken. Die Führungsvorsprünge sind ausgebildet und angeordnet zum Eingreifen in ein Wellental des abzulängenden Wellrohres, während die Schneide benachbart zu einem Führungsvorsprung angeordnet ist zum Schneiden im Bereich eines Wellenberges des Wellrohres.

Zum Stand der Technik ist weiter auf die CH 682471 A5 zu verweisen. Der hieraus bekannte Wellrohrschneider ist mit einer spiralfederartigen Halterung für die Schneide und den Führungsvorsprung ausgebildet.

Weiter sind Vorrichtungen zum Schneiden von Rohren aus der EP 12955688 A2 und der DE 2159744 A1 bekannt, die jeweils nur nach innen vorstehende Schneiden aufweisen und zangenartig ausgebildet sind, mit um eine Schwenkachs verschwenkbaren Maulabschnitten.

Aus der DE 202014105596 U1 und der US 6725533 B1 sind Abisolierwerkzeuge bekannt, die zum Abisolieren von Kabeln dienen.

### Zusammenfassung der Erfindung

Ausgehend von dem dargestellten Stand der Technik beschäftigt sich die Erfindung mit der Aufgabenstellung, ein Schneidgerät zum Ablängen von Wellrohren handhabungsmäßig günstig auszubilden.

Diese Aufgabe ist beim Gegenstand des Anspruches 1 gelöst, wobei darauf abgestellt ist, dass die Schneiden mit den Führungsvorsprüngen jeweils in einer Längsrichtung endseitig eines, eine Schalenlängsachse aufweisenden Schalenteiles ausgebildet sind, dass erste und zweite Längsränder jedes der Schalenteile senkrecht zu einer Ausrichtung der Schneiden verlaufen, dass das Schneidmaul im geschlossenen Zustand unter Bezug auf eine durch die ersten und zweiten Längsränder verlaufenden Mittelebene des Schneidmauls in Erstreckungsrichtung der Mittelebene ein größtes Öffnungsmaß aufweist, dass ein Erstreckungsmaß der Schalenteile in der Längsrichtung dem 1,2- bis 10-Fachen des größten Öffnungsmaßes entspricht und dass Schneidkanten der Schneiden nach innen in Richtung des Schneidmauls durch Randkanten der Führungsvorsprünge überragt sind.

Zufolge dieser Ausgestaltung ist ein handhabungsgünstig ausgebildetes Schneidgerät von erhöhtem Gebrauchswert angegeben. Die das Schneidgerät im Wesentlichen ausmachenden Schalenteile können unverlierbar in einem Anlenkbereich miteinander verbunden sein. Die Nutzungsstellung des Schneidgerätes ist bevorzugt die Schließstellung bzw. eine aus der Offenstellung heraus in Richtung einer Schließstellung verbrachte Stellung der Schalenteile, wobei der Nutzungsbereich, entsprechend der die Schneide als auch den Führungsvorsprung aufweisende Bereich, endseitig des insgesamt in der Nutzungsstellung langgestreckt rohrförmigen Schneidgeräts angeordnet sein kann.

Das Schneidgerät ist ergonomisch günstig ausgebildet, dies insbesondere hinsichtlich einer günstigen Krafteinleitung in das Schneidgerät im Zuge des Schneidens eines Wellrohres. Das Schneidgerät kann zufolge ggf. vollständigem Umfassens der Schalenteile durch Daumen und mindestens einem Finger, bevorzugt allen Fingern, im Wesentlichen aus dem Handgelenk heraus unter Schneiden der Wellrohrwandung um die Wellrohr-Längsachse gedreht werden. Hierbei ist es nicht zwingend notwendig, das Schneidgerät um vollständige 360° oder mehr um die Wellrohr-Längsachse zu drehen. Aufgrund der bevorzugten Mehrzahl von Schneiden, insbesondere der Anordnung jeweils einer Schneide an jedem Schalenteil, reicht auch eine Drehbewegung des Schneidgeräts um die Wellrohr-Längsachse um bspw. bis hin zu 180°, so weiter bspw. aus einer Grundstellung heraus um jeweils etwa 90° in die eine und in die entgegengesetzte Drehrichtung.

Durch die Wahl des größten Öffnungsmaßes und des in Nutzungsstellung in Erstreckung der Wellrohr-Längsachse betrachteten Erstreckungsmaßes der Schalenteile ist ein ergonomisch günstiges Ergreifen des Schneidgerätes im Wesentlichen insgesamt in der Handhöhlung erreichbar. Hierbei sind bevorzugt allein die Schalenteile griffbildend.

Bezüglich der sich in dem Schneidmaul erstreckenden Führungsvorsprüngen können die Randkanten der gegenüberliegenden Führungsvorsprünge unterschiedlich gekrümmt verlaufen, wobei der Radius der einen gekrümmten Randkante im Bereich der größten Krümmung um das 1,2- bis 10-Fache größer ist als der Radius der anderen gekrümmten Randkante.

Zufolge dieser Ausgestaltung der Führungsvorsprünge ist auch eine günstige Handhabung erreichbar, darüber hinaus eine günstige Handhabung im Zusammenhang mit Wellrohren unterschiedlicher Durchmesser. Durch die unterschiedlich gekrümmten Randkanten der gegenüberliegenden Führungsvorsprünge, welche in der Nutzungsstellung bevorzugt in dasselbe Wellental des Wellrohres eingreifen, ist eine günstige Führungsanlage des Schneidgerätes auch bei Wellrohren unterschiedlicher Durchmesser gegeben. Abhängig von dem Wellrohr-Durchmesser ergibt sich eine unterschiedliche Aufweitung des Schneidmauls des Schneidgerätes und entsprechend eine unterschiedliche Ausrichtung und Anstellung der beiden Führungsvorsprünge.

Eine erste Randkante eines ersten Führungsvorsprunges kann einen gerade verlaufenden Flankenabschnitt aufweisen, die zweite Randkante eines zweiten Führungsabschnittes kann einen gekrümmten Verlauf aufweisen, und der erste Führungsvorsprung kann bezogen auf die Mittelebene dem zweiten Führungsvorsprunges gegenüberliegen.

Der gerade Flankenabschnitt erstreckt sich bevorzugt langgestreckt geradlinig bzgl. seiner zur Führung bevorzugt im Wellengrund des Wellrohres gebildeten Randkante, wobei der geradlinige Verlauf entsprechend auch durch einen verhältnismäßig großen Krümmungsradius der Randkante gegeben sein kann. Ein solcher Krümmungsradius kann hierbei dem 100-Fachen oder mehr bis hin zu einem 500-Fachen oder mehr des Krümmungsradius der gegenüberliegenden Randkante mit offensichtlich gekrümmtem Verlauf entsprechen.

Insbesondere in der Schneidmaul-Schließstellung kann der gerade verlaufende Flankenabschnitt der diesbezüglichen Randkante in Bezug auf die Mittelebene betrachtet gegenüberliegend zu der Randkante des gegenüberliegenden Führungsvorsprunges mit gekrümmtem Verlauf angeordnet sein. Der gerade verlaufende Flankenabschnitt kann hierbei, wie auch bevorzugt, mit Bezug auf eine senkrechte Projektion der jeweiligen Randkanten auf die Mittelebene vollständig oder zumindest zu mehr als der Hälfte bis hin zu einem 0,7- oder 0,8-Fachen der Randkantenlänge im gerade verlaufenden Flankenabschnitt innerhalb der Erstreckung der Randkante mit gekrümmtem Verlauf angeordnet sein.

Gemäß einer möglichen Ausgestaltung kann vorgesehen sein, dass an den bzgl. der Mittelebene gegenüberliegenden ersten oder zweiten Längsrändern der Schalenteile sich entlang der ersten oder zweiten Längsränder erstreckende Schneiden zum Abisolieren von Kabeln ausgebildet sind. Zufolge dieser Ausgestaltung kann ein Schneidgerät angegeben sein, das sowohl zum Ablängen von Wellrohren geeignet ist, wie auch zum Entfernen der Isolation von Kabeln, weiter insbesondere Kabeln, wie diese in solchen Wellrohren verlegt werden.

In einer möglichen Ausgestaltung sind über die Länge der diesbezüglichen Längsränder der Schalenteile mehrere Schneiden zum Abisolieren von Kabeln unterschiedlicher Durchmesser ausgebildet.

Auch können weiter zugeordnet den Schneiden Abisolierschneiden für Kabel vorgesehen sein.

Auch kann bezogen auf die Mittelebene jedenfalls einer der Führungsvorsprünge bzgl. seiner beiden Endbereiche mit unterschiedlichem Abstand quer zu der Mittelebene enden, wobei ein Endbereich ggf. auch unter Kreuzung der Mittelebene auslaufend gestaltet sein kann.

So kann, wie in einer möglichen Ausgestaltung bevorzugt, der jeweils einem möglichen Verbindungsbereich abgewandte, gegebenenfalls dem die Abisolierschneiden aufweisenden Längsrand zugewandte, Endbereich der Führungsvorsprünge quer zur Mittelebene betrachtet einen geringeren Abstand zu der Mittelebene aufweisen als der jeweils gegenüberliegende Endbereich.

In einer möglichen Ausgestaltung entspricht der geringere Abstand des einen Endbereichs zur Mittelebene maximal dem 5-Fachen der in Achsrichtung betrachteten Materialstärke des diesbezüglichen Führungsvorsprunges, bis hin zu einem 1-Fachen der Stärke oder weniger. Insbesondere dieser Endbereich kann auch unter Kreuzung der Mittelebene auslaufen.

Die einem möglichen Verbindungsbereich zugewandten Endbereiche der Führungsvorsprünge können einen entsprechenden Abstand zur Mittelebene aufweisen, der dem 3-Fachen oder mehr bis hin zu einem 10-Fachen oder 20-Fachen der Materialstärke des Führungsvorsprunges entsprechen kann.

In jedem Schalenteil können zwei Führungsvorsprünge vorgesehen sein. In einer möglichen, auch bevorzugten, Ausgestaltung sind die Führungsvorsprünge eines Schalenteiles gleich ausgebildet, wobei jedem Führungsvorsprung eines Schalenteiles ein Führungsvorsprung des anderen Schalenteiles gegenüberliegt. So greifen in einer bevorzugten Ausgestaltung die jeweils gegenüberliegenden Führungsvorsprünge der beiden Schalenteile in der Nutzungsstellung in dasselbe Wellental des zu schneidenden Wellrohres ein.

In jedem Schalenteil kann in Längsrichtung der Schalenteile vor und hinter der Schneide ein erster oder ein zweiter Führungsvorsprung vorgesehen sein. So können die Führungsvorsprünge so angeordnet sein, dass diese in der Nutzungsstellung in in Längserstreckung des Wellrohres zwei aufeinanderfolgende Wellentäler eingreifen, während die Schneide bzw. die Schneiden beider Schalenteile zum Einschneiden des Wellrohres in dem zwischen den zur Führung dienenden Wellentälern ausgebildeten Wellenberg eingreifen.

In einem oder beiden Schalenteilen kann jeweils nur eine Schneide oder nur ein wirksamer Schneidbereich vorgesehen sein. Alternativ können aber auch in einem oder beiden Schalenteilen, in dem Schneidmaul in Umfangsrichtung der geschlossenen Schalenteile gesehen, zwei gesonderte Schneidbereiche vorgesehen sein. Es kann sich hierbei durchaus bezogen auf ein Schalenteil um eine (Zahlwort) Schneide handeln, die aber in Umfangsrichtung betrachtet zwei gesonderte, im Zuge der Nutzung in Wirkung tretende Schneidbereiche aufweist. Die beiden Schneidbereiche eines Schalenteiles können, wie auch bevorzugt, gleich gestaltet sein, dies bzgl. der Querschnittsgestaltung und/oder der wirksamen Länge der Schneidbereiche in Umfangsrichtung.

Ein Schneidbereich einer Schneide eines Schalenteiles, ggf. aber auch die Schneide selbst, kann bzgl. des größten Öffnungsmaßes des Schneidmauls außermittig angeordnet sein, darüber hinaus bevorzugt auch außermittig in Bezug auf die Umfangserstreckung des diesen Schneidbereich oder diese Schneide aufweisenden Schalenteils.

Bei einer möglichen Anordnung bzw. Ausbildung zweier in Umfangsrichtung zueinander beabstandeter, gesonderter Schneidbereiche können diese beide außermittig angeordnet sein.

In einer weiter möglichen Ausführung weist ein Schalenteil zwei Schneiden bzw. zwei gesonderte Schneidbereiche auf, während in dem anderen Schalenteil nur eine Schneide bzw. ein Schneidbereich vorgesehen ist.

So können dem ersten Führungsvorsprung mit dem kleineren Krümmungsmaß und/oder dem gerade verlaufenden Flankenabschnitt zwei Schneidbereiche zugeordnet sein. Bei einem Führungsvorsprung mit gerade verlaufendem Flankenabschnitt können diesbezüglich insgesamt in Umfangsrichtung betrachtet zwei im Wesentlichen aufeinanderfolgende gerade verlaufende Flankenabschnitte ausgebildet sein, die insgesamt in Umfangsrichtung betrachtet V-förmig mit einer zum gegenüberliegenden Führungsvorsprung gerichteten V-Öffnung angeordnet sein können. Bei einer derartigen Ausgestaltung kann jedem gerade verlaufenden Flankenabschnitt des insgesamt V-förmigen Führungsvorsprunges ein Schneidbereich zugeordnet bzw. in Längsrichtung der Schalenteile nebengeordnet sein.

Insbesondere die Schneiden bzw. Schneidbereiche, darüber hinaus ggf., wie auch bevorzugt, aber auch die Führungsvorsprünge, wie zudem auch die Schneiden zum Abisolieren und/oder Abtrennen von Kabeln, sind bevorzugt aus einem Metallwerkstoff hergestellt, insbesondere Stahl, während die diese Teile insgesamt tragenden Schalenteile aus einem demgegenüber anderen Werkstoff, wie weiter bspw. Kunststoff, hergestellt sein können. So liegen in einer möglichen Ausführungsform die Schalenteile als Kunststoff-Spritzteile vor.

Im geschlossenen Zustand der Schalenteile kann in Längsrichtung der Schalenteile gesehen eine Außenkontur des Schneidgerätes eine kleinere Größenerstreckung senkrecht zu der Mittelebene aufweisen als in Erstreckung quer zu der Längsrichtung. So kann die senkrecht zur Mittelebne betrachtete kleine Größenerstreckung dem 0,3- bis 0,95-Fachen, weiter etwa dem 0,4- bis 0,6-Fachen des größten Öffnungsmaßes entsprechen. Die vorbeschriebenen Maße (quer zur Längsrichtung und senkrecht zur Mittelebene) beziehen sich in bevorzugter Ausgestaltung auf die Außenmaße des Schneidgerätes im geschlossenen Zustand, beschreiben entsprechend weiter eine äußere Querschnittsgestaltung des Schneidgerätes, welche Querschnittsgestaltung sich bevorzugt im Wesentlichen über die gesamte Länge in Längsrichtung der Schalenteile betrachtet gleichbleibend ergibt.

In einer vorteilhaften Weiterbildung kann vorgesehen sein, dass die Schalenteile um eine Schwenkachse aus einer Offenstellung in eine Schließstellung und umgekehrt verschwenkbar sind. Hieraus ergibt sich eine weiter verbesserte Handhabung des Schneidgerätes. Die Schalenteile werden in einfachster Weise aus der Offenstellung in die Schließstellung und umgekehrt durch Verschwenken verbracht.

Insbesondere ergonomisch vorteilhaft erweist es sich, wenn die Schwenkachse in Längsrichtung der Schalenteile verläuft. So wird mit Umfassen der Schalenteile durch die Finger und den Daumen einer Hand mit Weiten und Verengen der Handhöhlung ein Öffnen und Schließen des Schneidmauls erreicht.

Die Schwenkachse kann, wie auch bevorzugt, in einem Verbindungsbereich der zweiten oder ersten Längsränder der Schalenteile verlaufen, wodurch eine unverlierbare Anordnung der Schalenteile erreicht sein kann. So können weiter die Schalenteile auch im geöffneten Zustand des Schneidmauls im Bereich der Schwenkachse verbunden sein.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos. Beispielsweise beinhaltet die Angabe 1,2- bis 10-fach auch die Offenbarung von 1,3- bis 10-fach, 1,2- bis 9,9-fach, 1,3- bis 9,9-fach etc., die Offenbarung von 0,3- bis 0,95-fach auch die Offenbarung von 0,4- bis 0,95-fach, 0,3- bis 0,85-fach etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung, welche lediglich ein Ausführungsbeispiel darstellt, näher erläutert. Es zeigt:
- Fig. 1: in perspektivischer Darstellung ein Schneidgerät in Schließstellung;
- Fig. 2: eine weitere perspektivische Darstellung des Schneidgerätes;
- Fig. 3: das Schneidgerät in Vorderansicht;
- Fig. 4: die Rückansicht auf das Schneidgerät;
- Fig. 5: eine weitere Ansichtsdarstellung des Schneidgerätes;
- Fig. 6: die Rückansicht zu Fig. 5;

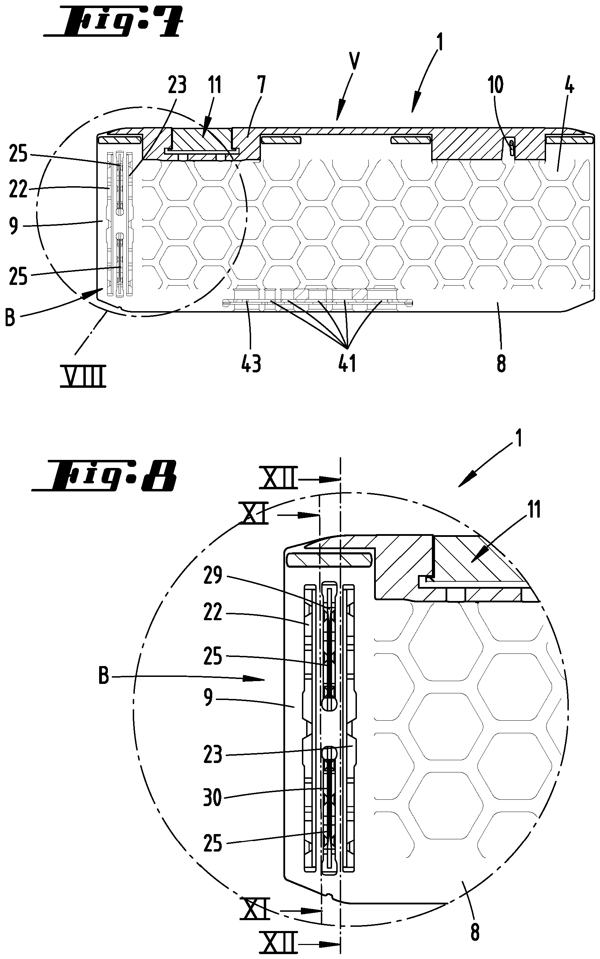

- Fig. 7: den Schnitt gemäß der Linie VII - VII in Fig. 5;
- Fig. 8: die Herausvergrößerung des Bereiches VIII in Fig. 7;

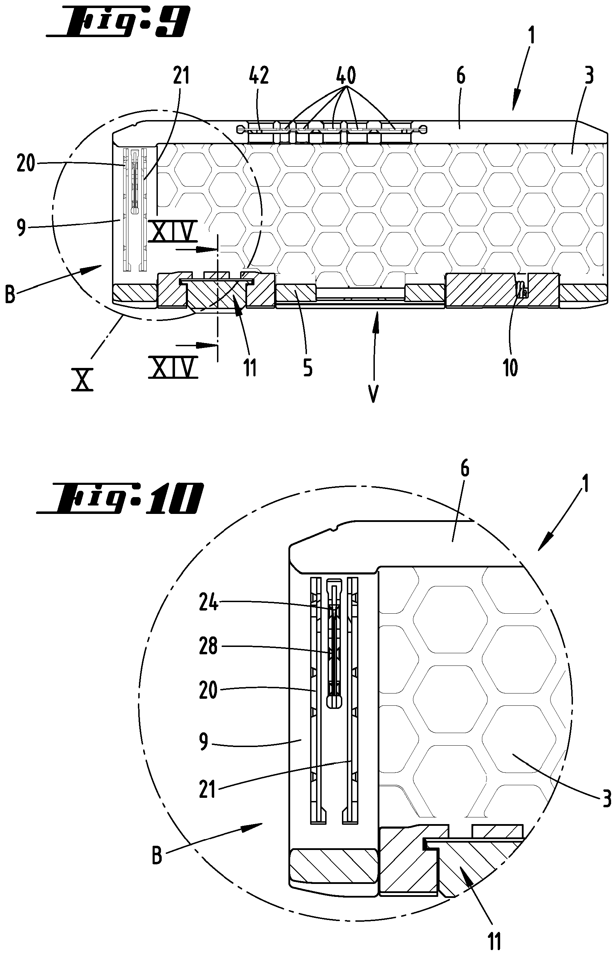

- Fig. 9: den Schnitt gemäß der Linie IX - IX in Fig. 5;
- Fig. 10: die Herausvergrößerung des Bereiches X in Fig. 9;

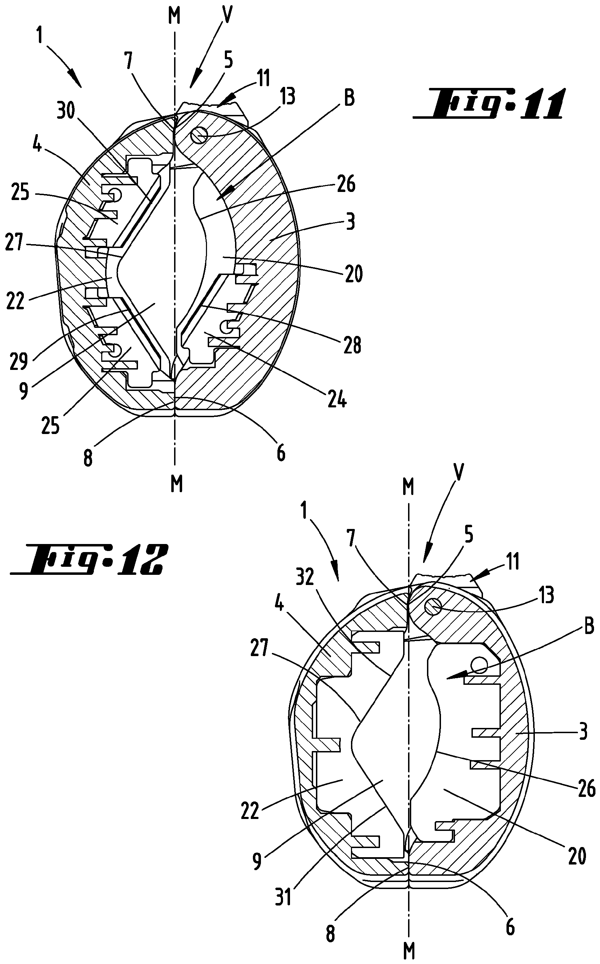

- Fig. 11: den Schnitt gemäß der Linie XI - XI in Fig. 8;
- Fig. 12: den Schnitt gemäß der Linie XII - XII in Fig. 8;
- Fig. 13: eine schematische Darstellung der Anordnung von Führungsvorsprüngen und Schneidbereichen, betreffend die Schneidmaul-Schließstell ung;
- Fig. 14: den Schnitt gemäß der Linie XIV - XIV in Fig. 9, eine Verriegelungsstellung des Schneidgerätes betreffend;
- Fig. 15: eine der Fig. 14 entsprechende Darstellung, jedoch betreffend die Entriegelungsstellung;
- Fig. 16: das Schneidgerät in einer Stirnansicht, betreffend die Schneidma ul-Schließstellung;
- Fig. 17: eine der Fig. 16 entsprechende Darstellung, jedoch bei in dem Schneidgerät aufgenommenem und abzulängendem Wellrohr;
- Fig. 18: den Schnitt gemäß der Linie XVIII - XVIII in Fig. 17.

### Beschreibung der Ausführungsformen

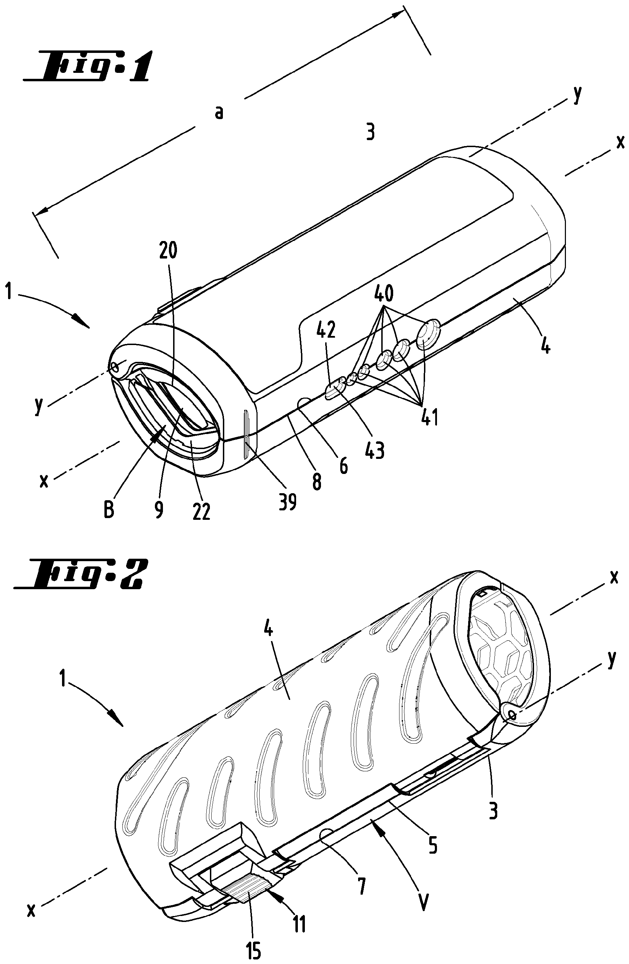

Dargestellt und beschrieben ist, zunächst mit Bezug zu den Darstellungen in den Figuren 1 und 2, ein Schneidgerät 1 zum Ablängen von Wellrohren 2.

Das Schneidgerät 1 ist ausgelegt und ausgebildet zur Bedienung mit nur einer Hand, setzt sich darüber hinaus im Wesentlichen zusammen aus zwei Schalenteilen 3 und 4, die in bevorzugter Ausgestaltung im Kunststoffspritzverfahren hergestellt sind.

Die Schalenteile 3 und 4 formen aufeinander zuweisende Längsränder 5 bis 8 auf, die in einer u.a. in den Figuren 1 und 2 dargestellten Schließstellung des Schneidgerätes 1 ggf. aneinanderliegend eine Mittelebene M des Schneidgerätes 1 aufspannen.

Die Schalenteile 3 und 4 können über die in Erstreckungsrichtung der in Schließstellung des Schneidgerätes 1 in der Mittelebene M verlaufenden Mittelachse x betrachteten Größenerstreckung a (Länge) jeweils eine durchgehend gleichbleibende Querschnittsgestaltung im Wesentlichen aufweisen, mit Ausnahme eines in Längserstreckung betrachtet endseitigen Schneid- und Führungsbereiches B.

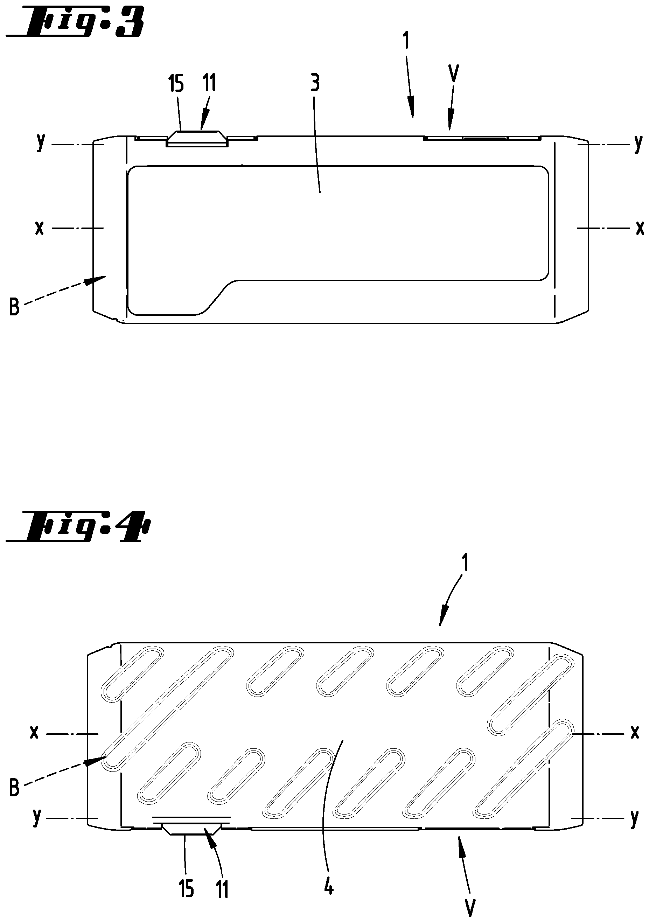

Gegebenenfalls kann jeweils endseitig die Außenfläche der Schalenteile 3 und 4 bei gesamter Betrachtung des Schneidgerätes 1 in der Schließstellung sich konisch nach außen verjüngend verlaufen (vgl. Figuren 3 und 4).

Die aufeinander zuweisenden zweiten Längsränder 5 und 7 der Schalenteile 3 und 4 sind scharnierartig wirkend miteinander verbunden, wobei sich eine geometrische Schwenkachse y ergibt, die sich parallel zur Mittelachse x und somit im Wesentlichen in Längserstreckungsrichtung des Schneidgerätes 1 erstreckt. Es ergibt sich so ein Verbindungsbereich V, in welchem die Schwenkachse y verläuft.

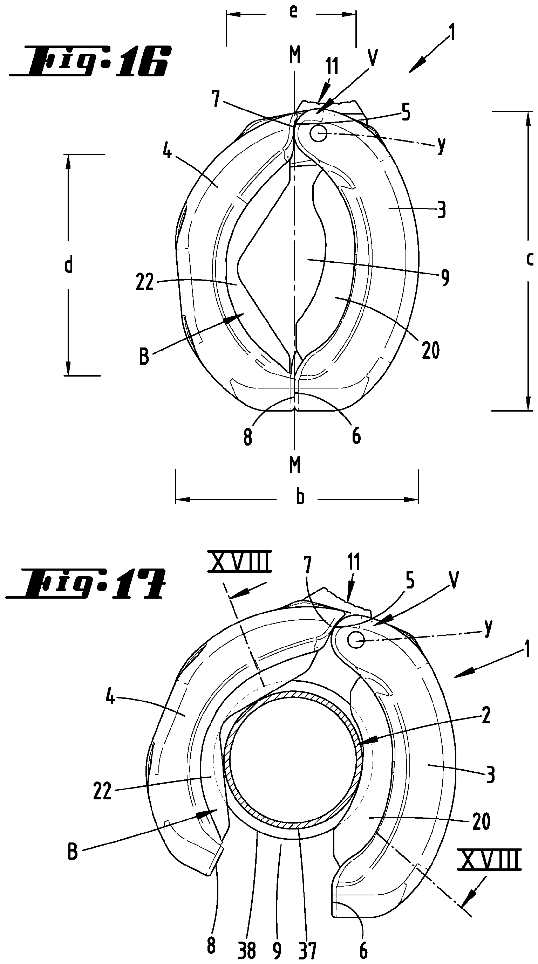

Die Längsränder 5 bis 8 begrenzen in der Nutzungsstellung des Schneidgerätes 1 zugleich das im Schneid-/Führungsbereich B sich einstellende, sich aus Maulabschnitten der Schalenteile 3 und 4 zusammensetzende Schneidmaul 9, wobei weiter die die Schneidmaulgröße bestimmenden Längsränder der Schalenteile 3 und 4, insbesondere die zweiten Längsränder 5 und 7, auch im geöffneten Zustand des Schneidmauls 9, bspw. gemäß der Darstellung in Fig. 17, im Bereich der Schwenkachse y verbunden sind.

Weiter kann das Schneidgerät 1 eine Größenerstreckung b senkrecht zur Mittelebene M aufweisen, die etwa dem 0,25- bis 0,4-Fachen der in Längsrichtung betrachteten Größenerstreckung a entsprechen kann.

Die in Erstreckung der Mittelebene M und quer zur Mittelachse x bzw. Schwenkachse y betrachtete Größenerstreckung c des Schneidgerätes 1 in der Schließstellung kann dem 0,3- bis 0,5-Fachen der in Längsrichtung betrachteten Größenerstreckung a entsprechen, weiter etwa dem 1,05- bis 1,5-Fachen der senkrecht hierzu betrachteten Größenerstreckung b.

Wie insbesondere aus der Stirnansicht in Fig. 16 zu erkennen, ergibt sich bei einem geschlossenen Schneidgerät 1 eine insgesamt ovalförmige Außenkontur, die ergonomisch günstig durch die Handinnenfläche umgriffen werden kann. Das Schneidgerät 1 liegt bei Nutzung von den Fingern und dem Daumen bevorzugt umschlossen in der Handhöhlung ein.

Die in der Schließstellung im Wesentlichen ovale Außenkontur des Schneidgerätes 1 bildet sich in dieser Schließstellung bevorzugt auch im Wesentlichen innenkonturseitig der aufeinanderliegenden Schalenteile 3 und 4 ab.

Die Schalenteile 3 und 4 können, wie auch bevorzugt, über eine Feder 10, bspw. eine Schenkelfeder, in Richtung auf die Offenstellung des Schneidgerätes 1 belastet sein. Das Schneidgerät 1 ist entsprechend bevorzugt in einer von außen unbelasteten Grundstellung über die Feder 10 in eine Offenstellung gedrängt. Die Feder 10 kann, wie auch bevorzugt, im Verbindungsbereich V, ggf. die Schwenkachse y mittig aufnehmend, angeordnet sein.

Das Schneidgerät 1 kann des Weiteren in der Schließstellung verriegelt sein, um so das Schneidgerät 1 platzgünstig verstauen zu können. Die Verriegelung wirkt entgegen der Kraft der Feder 10.

Hierzu kann ein schiebeverlagerbares Verriegelungsteil 11 vorgesehen sein. Dieses ist bevorzugt im Verbindungsbereich V angeordnet, hierbei mit einer Langlochausbildung 12 den die Schwenkachse y bildenden Achskörper 13 umfassend.

Das Verriegelungsteil 11 liegt im Wesentlichen in einer dem Verbindungsbereich V zugewandten Ausnehmung 14 des einen Schalenteils, hier des Schalenteils 4, ein, wobei eine Betätigungsfläche 15 des Verriegelungsteils 11 nach außen zur Betätigung freiliegt.

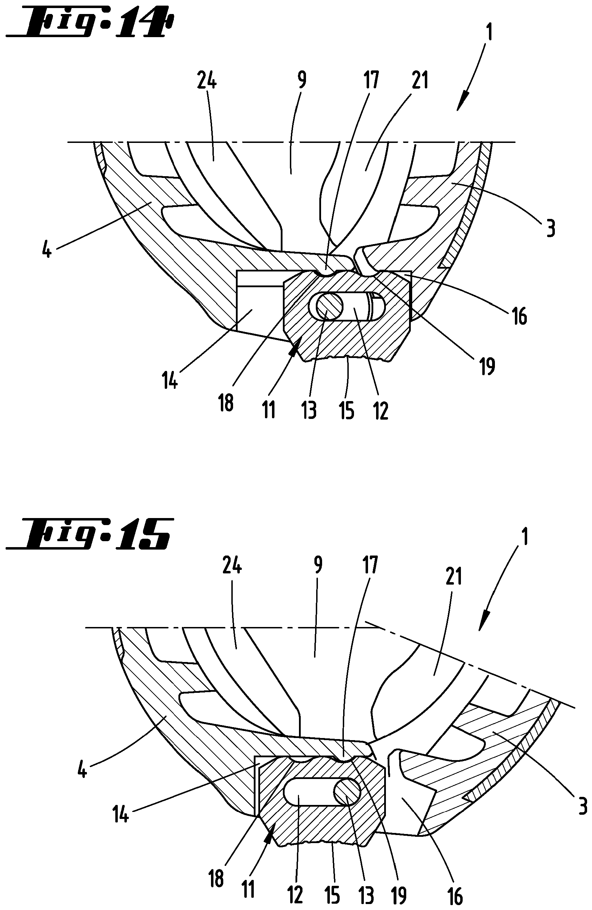

Das Verriegelungsteil 11 ist quer zur Ausrichtung der Schwenkachse y schiebeverlagerbar, unter Querung der Mittelebene M, zum sperrenden Eingriff in eine in Schließstellung des Schneidgerätes 1 zugewandte Ausnehmung 16 des anderen Schalenteiles, hier des Schalenteiles 3 (vgl. Fig. 14).

Das andere Schalenteil, hier das Schalenteil 3, ist hiernach gegen ein Verschwenken um die Schwenkachse y gesperrt. Diese Sperrstellung kann durch eine Rastung gesichert sein. So kann ein in der Ausnehmung 14 des einen Schalenteils ausgebildeter Rastvorsprung 17 in eine zugeordnete Rastausnehmung des Verriegelungsteils 11 eingreifen.

Eine solche Verrastung kann auch bei der Entriegelungsstellung gemäß Fig. 15 vorgesehen sein, wozu hier der Rastvorsprung 17 in eine in Verschieberichtung des Verriegelungsteils 11 weiter vorgesehene Rastausnehmung 19 eintaucht.

In der in Fig. 15 dargestellten Entriegelungsstellung ist das Verriegelungsteil 11 so weit zurückverlagert, dass die Ausnehmung 16 des anderen Schalenteils, hier des Schalenteils 3, vollständig freigegeben ist und somit das Schalenteil 3 um die Schwenkachse y schwenkbar ist.

Im Schneid-/Führungsbereich B, der in dem dargestellten Ausführungsbeispiel in dem Endbereich des Schneidgerätes 1 ausgebildet ist, der im Wesentlichen auch das Verriegelungsteil 11 mit den zugeordneten Ausnehmungen 14 und 16 aufweist, weist im Wesentlichen je Schalenteil 3 und 4 zwei in Erstreckungsrichtung der Schwenkachse y zueinander beabstandet angeordnete erste und zweite Führungsvorsprünge 20, 21 bzw. 22, 23 auf. Zwischen einem Paar erster Führungsvorsprünge 22, 23 bzw. zwischen einem Paar zweiter Führungsvorsprünge 20, 21 des jeweiligen Schalenteils 3 bzw. 4 ist zumindest eine Schneide 24, 25 angeordnet. Die Schneide 24 bzw. 25 eines Schalenteils 3 bzw. 4 ist in Erstreckungsrichtung der Schwenkachse y betrachtet bevorzugt gleichmäßig zu den beiden flankierenden Führungsvorsprüngen 20, 21 bzw. 22, 23 beabstandet.

Die Führungsvorsprünge 20, 21 bzw. 22, 23 eines Schalenteiles 3 bzw. 4 sind bevorzugt gleich ausgebildet, dies insbesondere hinsichtlich der nach innen zum Schneidmaul 9 weisenden Randkanten 26, 27.

In der Schließstellung des Schneidgerätes 1 liegen sich die Randkanten 26 und 27 der Schalenteile 3 und 4 gegenüber. Entsprechend erstrecken sich die ersten Führungsvorsprünge 22 und 23 wie auch die zweiten Führungsvorsprünge 20 und 21 der beiden Schalenteile 3 und 4 innerhalb einer senkrecht zur Schwenkachse y verlaufenden Ebene.

Die Schneiden 24 und 25 der beiden Schalenteile 3 und 4 können, wie auch bevorzugt, gleich gestaltet sein, wobei in dem dargestellten Ausführungsbeispiel in den die zweiten Führungsvorsprünge 20 und 21 aufweisenden Schalenteil 3 nur eine Schneide 24 vorgesehen ist, während in dem anderen Schalenteil 4 zwischen den ersten Führungsvorsprüngen 22 und 23 in Umfangsrichtung hintereinander folgend und zueinander beabstandet zwei Schneiden 25 vorgesehen sind. Es kann sich hierbei auch um nur eine Schneide handeln mit zwei gesondert ausgebildeten Schneidbereichen. Diese Schneidbereiche 28 bis 30 sind die schneidwirksamen Schneidrandkanten der Schneiden 24 und 25.

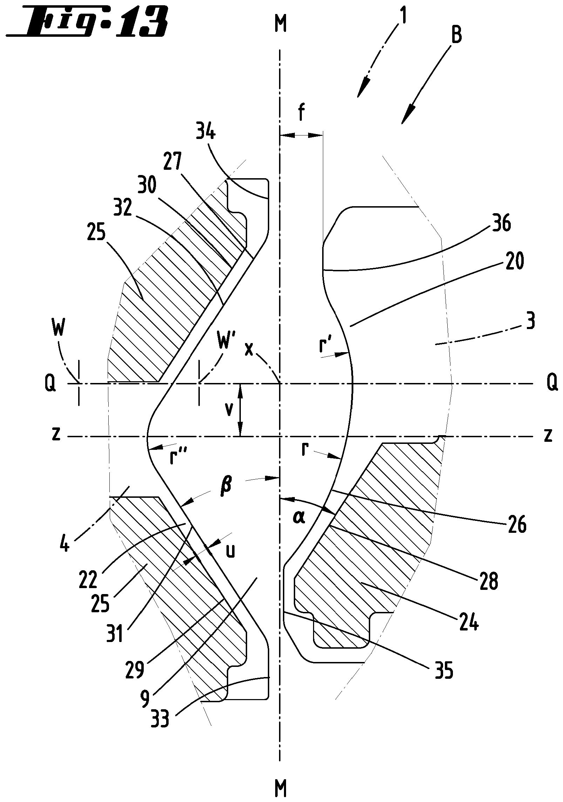

Bevorzugt sind alle Schneidbereiche 28 bis 30 bzw. alle Schneiden 24 und 25 mit Bezug auf die Umfangserstreckung des jeweiligen Schalenteiles 3 und 4 im Schneid-/Führungsbereich B außermittig angeordnet, so weiter, wie beispielhaft in der schematischen Darstellung in Fig. 13 gezeigt, außerhalb einer senkrecht zu der Mittelebene M und die Mittelachse x querenden Querebene Q.

Entlang der Mittelebene M und der Querebene Q sind auch die Öffnungsmaße d und e des Schneidmaules 9 definiert, wobei das sich zwischen den Längsrändern 5 bis 8 erstreckende größere Öffnungsmaß d etwa dem 1,5-bis 2,5-Fachen des quer hierzu betrachteten Öffnungsmaßes e entsprechen kann. Das Erstreckungsmaß a (Länge) der Schalenteile 3 in Richtung der Schwenkachse y kann gemäß dem dargestellten Ausführungsbeispiel etwa dem 3,5- bis 5-Fachen, weiter etwa dem 4-Fachen des größten Öffnungsmaßes d entsprechen.

Die Schneidbereiche 28 bis 30 bzw. die hierdurch gebildeten Schneidkanten der Schneiden 24 und 25 sind innerhalb einer gemeinsamen quer zur Mittelachse x ausgerichteten und parallel zu der die Führungsvorsprünge einer Gruppe aufnehmenden Ebene angeordnet, wobei gemäß der schematischen Darstellung in Fig. 13 jede Schneidkante bzw. jeder Schneidbereich 28 bis 30 zu der Mittelebene M einen spitzen Winkel α von etwa 30° bis 45° einschließt.

In einer möglichen Ausgestaltung ist der spitze Winkel α bei allen Schneiden 24 und 25 gleich, wobei der Schneidbereich 28 der Schneide 24 mit Bezug auf die Mittelebene M in etwa spiegelsymmetrisch, hierbei aber etwa um ein Drittel der Schneidkantenlänge in Richtung der Querebene Q versetzt zu dem Schneidbereich 29 der Schneide 25 angeordnet ist. Der Schneidbereich 30 der weiteren Schneide 25 im Schalenteil 4 ist bevorzugt klappsymmetrisch zu einer in Fig. 13 senkrecht zur Mittelebene M verlaufenden Symmetrieachse z angeordnet. Der Schneidbereich 28 der Schneide 24 im Schalenteil 3 überschreitet in der dargestellten Ausführungsform nicht diese Symmetrieachse z. Letztere ist zu der die Mittelachse x schneidenden Querebene Q um ein Maß v versetzt, das etwa dem 0,1- bis 0,3-Fachen des größten Öffnungsmaßes d des Schneidmauls 9 entsprechen kann.

Die Schneidbereiche 28 bis 30 bzw. die hierdurch gebildeten Schneidkanten sind nach innen in Richtung des Schneidmauls 9 überragt durch die Randkanten 26 und 27 der zweiten Führungsvorsprünge 20 bis 23. Es ergibt sich ein Überstandsmaß u der Randkanten 26 und 27 gegenüber den Schneidbereichen 28 bis 30, das etwa dem 0,1- bis 0,5-Fachen des Abstandsmaßes der Führungsvorsprünge 20 und 21 bzw. 22 und 23 in Erstreckungsrichtung der Schwenkachse y entsprechen kann.

Von der Mittelebene M aus betrachtet weisen die Randkanten 26 und 27 der Führungsvorsprünge 20 bis 23 jeweils einen konkav gekrümmten Verlauf auf, wobei das Krümmungsmaß der zweiten Randkante 26 der zweiten Führungsvorsprünge 20 und 21 im Schalenteil 3 größer ist als das Krümmungsmaß der gegenüberliegenden ersten Randkante 27 der ersten Führungsvorsprünge 22 und 23.

Die erste Randkante 27 der ersten Führungsvorsprünge 22 und 23 weist bevorzugt zwei gerade verlaufende Flankenabschnitte 31 und 32 auf, die jeweils im Wesentlichen parallel unter Einhaltung des Überstandsmaßes u zu den zugeordneten Schneidbereichen 29 und 30 der Schneiden 25 verlaufen. Es ergibt sich so eine im Wesentlichen V-förmige Ausbildung der ersten Randkante 27 insgesamt mit einem Wendepunkt auf der Symmetrieachse z.

Die Flankenabschnitte 31 und 32 verlaufen mit Bezug auf die schematische Darstellung in Fig. 13 unter Einschluss eines spitzen Winkels β, der im Wesentlichen wertemäßig dem Winkel α entsprechen kann, zu der Mittelebene M. Der die Symmetrieachse z querende und die Flankenabschnitte 31 und 32 verbindende Abschnitt ist verrundet mit einem Radius r".

Weiter laufen die beiden Flankenabschnitte 31 und 32 mit Abstand zu der Mittelebene M in Endbereiche 33, 34 aus. Diese verlaufen bevorzugt parallel ausgerichtet zur Mittelebene M, dies bspw. unter Einhaltung einer Beabstandung in der Schließstellung des Schneidgerätes 1, die etwa dem Überstandsmaß u entsprechen kann.

Die zweite Randkante 26 der zweiten Führungsvorsprünge 20, 21 im Schalenteil 3 ist mit einer annähernd gleichmäßigen Krümmung versehen, im Wesentlichen resultierend aus einem im Grundriss gemäß Fig. 13 sich ergebenden Kurvenverlauf der zweiten Randkante 26 mit einem Radius r, der etwa dem 0,5- bis 0,8-Fachen des kürzeren Öffnungsmaßes e im Schneidmaul 9 entsprechen kann. Der geometrische Mittelpunkt W der die zweite Randkante 26 definierenden Kreislinie kann, wie bevorzugt, in der Querebene Q außerhalb des Schneidmauls 9 aber noch innerhalb der gesamten Querschnittsgestaltung des gegenüberliegenden Schalenteiles 4 liegen. Der Wert des Radius r kann etwa dem 4- bis 8-Fachen, bspw. etwa dem 5-Fachen des Wertes des Radius r" entsprechen.

Der so geschlagene Kreisbogen erstreckt sich bevorzugt, die Symmetrieachse z überschreitend, bis hin etwa zur Querebene Q, um hiernach mit einem gegenüber dem zuvor beschriebenen Abschnitt mit Radius r stärker gekrümmten Bogenabschnitt überzugehen. Dessen Radius r' bezieht sich auf einen Mittelpunkt W', der ebenfalls in der Querebene Q angeordnet ist, hier jedoch innerhalb des Schneidmaules 9, von der zweiten Randkante 26 aus betrachtet jenseits der Mittelebene M.

Beide Kurvenabschnitte mit den Radien r und r' der zweiten Randkante 26 gehen über in Endbereiche 35 und 36, die, wie auch die Endbereiche 33, 34 der gegenüberliegenden ersten Randkante 27, geradlinig, parallel verlaufend zur Mittelebene M ausgerichtet sind.

Hierbei verläuft der sich an den Krümmungsbereich mit dem Radius r unmittelbar anschließende Endbereich 33 nahezu entlang der Mittelebene M, während der gegenüberliegende Endbereich 36, der sich an den gekrümmten Abschnitt mit dem Radius r' anschließt, parallel versetzt zur Mittelebene M verläuft, unter Einhaltung eines Abstandsmaßes f, das etwa dem 0,8- bis 1,2-Fachen des Versatzmaßes v entsprechen kann.

Die Endbereiche 33 bis 36, insbesondere die Endbereiche 33, 34 und 36 sind jeweils die Mittelebene M bevorzugt weder berührend noch durchsetzend angeordnet, wenngleich zumindest einer dieser Endbereiche, bspw. der Endbereich 35 auch die Mittelebene M kreuzend auslaufen kann.

Die geradlinig, parallel zur Mittelebene M auslaufenden Endbereiche 35 und 36 der zweiten Randkante 26 verlaufen mit Bezug auf eine Projektion senkrecht auf die Mittelebene M innerhalb der Erstreckung der unter einem Winkel β verlaufenden Flankenabschnitte 31 und 32 der ersten Randkante 27 (dies bezogen auf die Geschlossenstellung des Schneidgerätes 1). Hieraus ergibt sich weiter mit Bezug auf die vorbeschriebene Projektion eine vollständige Überdeckung der kurvenartig geformten zweiten Randkante 26 der zweiten Führungsvorsprünge 20, 21 des Schalenteils 3 relativ zu der im Wesentlichen V-förmig verlaufenden ersten Randkante 27 der ersten Führungsvorsprünge 22, 23 des Schalenteiles 4.

Zum Ablängen eines Wellrohres wird dieses nach Aufschwenken der Schalenteile 3 und 4 um die Schwenkachse y so in das Schneidgerät 1 eingelegt, dass die Wellrohr-Längsachse entlang der Mittelachse x des Schneidgerätes 1 orientiert in dem Schneidgerät 1 einliegt.

Mit Aufeinanderzuschwenken der Schalenteile 3 und 4 um die Schwenkachse y infolge einer Einwirkung von außen durch die das Schneidgerät 1 umfassenden Hand werden die Führungsvorsprünge 20 bis 23 in zwei in Längsrichtung des Wellrohres 2 bevorzugt unmittelbar hintereinander folgende Wellentäler 37 eingefahren. Dieses Einfahren kann über die gesamte in Umfangsrichtung betrachtete Länge der jeweiligen Randkante 26 bzw. 27 erfolgen, ggf. aber auch nur partiell.

Die vorbeschriebene Geometrie der Führungsvorsprünge 20 bis 23 insbesondere derer Randkanten 26 und 27 erlaubt in günstiger Weise die Nutzung des Schneidgerätes 1 bei Wellrohren 2 unterschiedlicher Durchmesser.

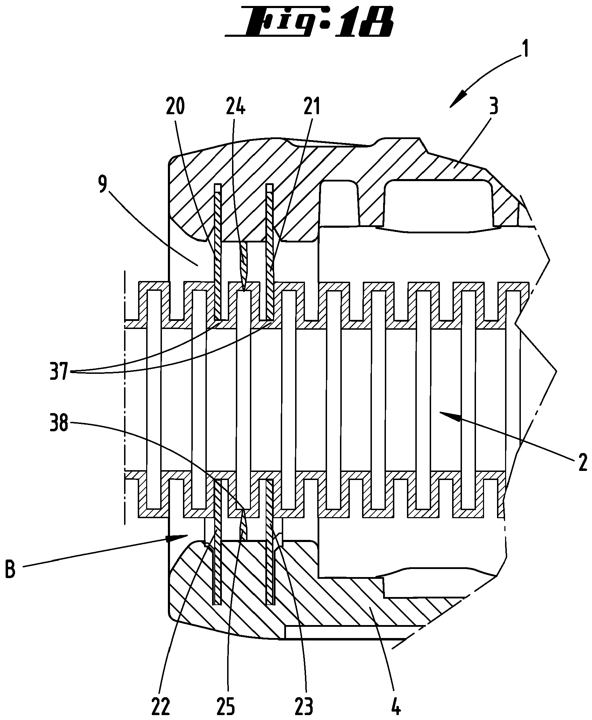

Wie insbesondere aus der Schnittdarstellung in Fig. 18 ersichtlich ist bei geführtem Wellrohr 2 in dem Schneidgerät 1 die Anordnung weiter so getroffen, dass die Schneiden 24 und 25 den zwischen den der Führung dienenden Wellentälern 37 ausgeformten Wellenberg 38 des Wellrohrs 2 zugeordnet sind. Mit entsprechender Druckbelastung von außen durch die die Schalenteile 3 umgreifende Hand werden die Schneiden 24 und 25 in das Wellrohrmaterial gedrückt unter Überlagerung einer Drehbewegung des Schneidgerätes 1 um dessen Mittelachse x und entsprechend um die Mittelachse des Wellrohrs 2, demzufolge ein Einschneiden des Wellrohrs 2 im Bereich des Wellenberges 38 erfolgt. Es ist so ein zufolge der gegebenen Führung exakter Schnitt bevorzugt im Wesentlichen in einer senkrecht zur Wellrohr-Längsachse verlaufenden Ebene erreichbar.

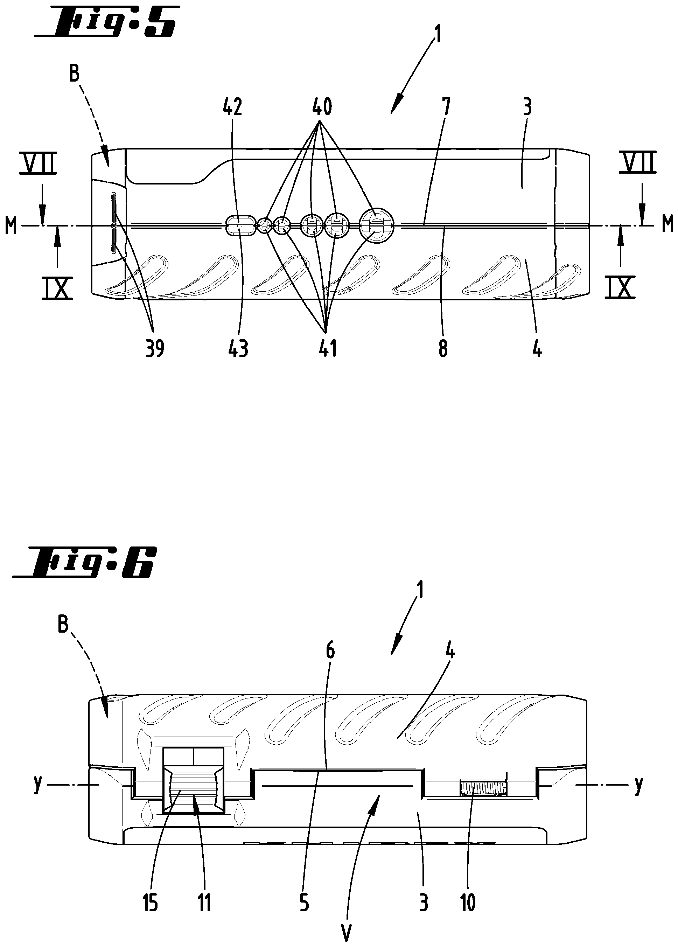

Zur günstigen Handhabung des Schneidgerätes 1 ist die axiale Position der Schneiden 24 und 25 wandungsaußenseitig des Schneidgerätes 1 markiert. Eine solche Markierung in Form einer Einkerbung 39 ist in dem dargestellten Ausführungsbeispiel mantelaußenseitig der Schalenteile 3 und 4 zugeordnet deren der Schwenkachse y abgewandten Längsränder 6 und 8 vorgesehen. Diese Einkerbung 39 übergreift entsprechend in der Schließstellung des Schneidgerätes 1 gemäß der Darstellung in Fig. 5 die zugleich auch die Trennebene darstellende Mittelebene M.

Der abgelängte Abschnitt des Wellrohres 2 ist nach Durchführung des Trennschnittes zumindest teilweise in dem Schneidgerät 1 aufgenommen und gefangen. Dies erleichtert weiter die Handhabung. Darüber hinaus auch die bevorzugte Anordnung des Schneid-/Führungsbereiches D unmittelbar zugeordnet einem Stirnbereich des Schneidgerätes 1, womit in günstiger Weise auch Ablängungen von Wellrohren in räumlich schwer zugänglichen Bereichen ermöglich ist.

Des Weiteren kann das Schneidgerät 1 im Bereich der der Schwenkachse y abgewandten ersten Längsränder 6 und 8 mit einer Mehrzahl von Schneiden 40, 41 zum Abisolieren von Kabeln versehen sein, insbesondere zum Abisolieren einzelner Drähte. So können gemäß dem dargestellten Ausführungsbeispiel in Längserstreckung des Schneidgerätes 1 hintereinander liegend und zueinander beabstandet mehrere Schneiden 40, 41 ausgebildet sein, zum Abisolieren von Kabeln oder Drähten unterschiedlicher Durchmesser. Hierbei ist jeweils eine Schneide 40 in dem ersten Längsrand 6 des Schalenteils 3 gegenüberliegend angeordnet zu einer Schneide 41 in dem ersten Längsrand 8 des Schalenteiles 4. Die Schneiden 40 und 41 sind mit vom Längsrand aus betrachtet konkaven Schneidkanten versehen, die in Zusammenwirkung mit der gegenüberliegenden Schneide bei geschlossenem Schneidgerät 1 eine kreisrunde Schneide entsprechend dem Drahtdurchmesser ergeben. Die Schneidkanten verlaufen in Erstreckungsrichtung der Schwenkachse y.

In dem dargestellten Ausführungsbeispiel sind fünf derartiger Abisolierschneiden vorgesehen.

Weiter nebengeordnet und somit ebenfalls im Bereich der aufeinander zuschwenkbaren ersten Längsränder 6 und 8 angeordnet sind weitere Abisolierschneiden 42, 43 angeordnet mit jeweils einer bevorzugt gerade und in Schließstellung parallel zur Mittelebene M verlaufenden Schneidkante. Die Schneidkanten können in der Schließstellung aneinander liegen.

Alle Schneiden 40 bis 43 können, wie auch die Schneiden 24 und 25, im Schneid-/Führungsbereich B, darüber hinaus bevorzugt auch die Führungsvorsprünge 20 bis 23 in dem Material der Schalenteile 3, 4 verankert sein, so bspw. bei Herstellung der Schalenteile 3, 4 im Kunststoffspritzverfahren zufolge Umspritzen der bevorzugt als Stahlteile ausgebildeten Schneiden und Vorsprüngen.

**Liste der Bezugszeichen**

| | | | |
|---|---|---|---|
| 1 | Schneidgerät | 29 | Schneidbereich |
| 2 | Wellrohr | 30 | Schneidbereich |
| 3 | Schalenteil | 31 | Flankenabschnitt |
| 4 | Schalenteil | 32 | Flankenabschnitt |
| 5 | zweiter Längsrand | 33 | Endbereich |
| 6 | erster Längsrand | 34 | Endbereich |
| 7 | zweiter Längsrand | 35 | Endbereich |
| 8 | erster Längsrand | 36 | Endbereich |
| 9 | Schneidmaul | 37 | Wellental |
| 10 | Feder | 38 | Wellenberg |
| 11 | Verriegelungsteil | 39 | Einkerbung |
| 12 | Langlochausbildung | 40 | Schneide |
| 13 | Achskörper | 41 | Schneide |
| 14 | Ausnehmung | 42 | Abisolierschneide |
| 15 | Betätigungsfläche | 43 | Abisolierschneide |
| 16 | Ausnehmung | | |
| 17 | Rastvorsprung | a | Größenerstreckung |
| 18 | Rastausnehmung | b | Größenerstreckung |
| 19 | Rastausnehmung | c | Größenerstreckung |
| 20 | zweiter Führungsvorsprung | d | Öffnungsmaß |
| 21 | zweiter Führungsvorsprung | e | Öffnungsmaß |
| 22 | erster Führungsvorsprung | f | Abstandsmaß |
| 23 | erster Führungsvorsprung | r | Radius |
| 24 | Schneide | r' | Radius |
| 25 | Schneide | r" | Radius |
| 26 | zweite Randkante | u | Überstandsmaß |
| 27 | erste Randkante | v | Versatzmaß |
| 28 | Schneidbereich | x | Mittelachse |
| y | Schwenkachse | | |
| z | Symmetrieachse | | |
| | | | |
| B | Schneid-/Führungsbereich | | |
| M | Mittelebene | | |
| Q | Querebene | | |
| V | Verbindungsbereich | | |
| W | Mittelpunkt | | |
| W' | Mittelpunkt | | |
| | | | |
| α | Winkel | | |
| β | Winkel | | |

## Patentansprüche

1. Schneid gerät (1) zum Ablängen von Wellrohren (2), mit einem Schneidmaul (9), bestehend aus zwei Maulabschnitten, wobei beide Maulabschnitte jeweils eine Schneide (24, 25) und jeweils einen senkrecht zu der Schneide (24, 25) beabstandeten und gleichgerichtet zu der Schneide (24, 25) verlaufenden Führungsvorsprung (20, 21, 22, 23) aufweisen **dadurch gekennzeichnet, dass** die Schneiden (24, 25) mit den Führungsvorsprüngen (20, 21, 22, 23) jeweils in einer Längsrichtung endseitig eines, eine Schalenlängsachse aufweisenden Schalenteiles (3, 4) ausgebildet sind, dass erste und zweite Längsränder (5 bis 8) jedes der Schalenteile (3, 4) senkrecht zu einer Ausrichtung der Schneiden (24, 25) verlaufen, dass das Schneidmaul (9) im geschlossenen Zustand unter Bezug auf eine durch die ersten und zweiten Längsränder (5 bis 8) verlaufenden Mittelebene (M) des Schneidmauls (9) in Erstreckungsrichtung der Mittelebene (M) ein größtes Öffnungsmaß (d) aufweist,dass ein Erstreckungsmaß (a) der Schalenteile (3, 4) in der Längsrichtung dem 1,2- bis 10-Fachen des größten Öffnungsmaßes (d) entspricht und dass Schneidkanten der Schneiden (24, 25) nach innen in Richtung des Schneidmauls (9) durch Randkanten (26, 27) der Führungsvorsprünge (20, 21, 22, 23) überragt sind.

2. Schneidgerät nach Anspruch 1, **dadurch gekennzeichnet, dass** an den bzgl.
der Mittelebene (M) gegenüberliegenden ersten oder zweiten Längsrändern (5, 6, 7, 8) der Schalenteile (3, 4) sich entlang der ersten oder zweiten Längsränder (5, 6, 7,8) erstreckende Schneiden (40, 41) zum Abisolieren von Kabeln ausgebildet sind.

3. Schneidgerät nach Anspruch 2, **dadurch gekennzeichnet, dass** weiter zugeordnet den Schneiden (40, 41) Abisolierschneiden (42, 43) für Kabel vorgesehen sind.

4. Schneidgerät nach einem der vorhergehenden Ansprüche, **dadurch gekennzeichnet, dass** in einem oder beiden Schalenteilen (3, 4) in dem Schneidmaul (9,) in Umfangsrichtung der geschlossenen Schaltenteile (3, 4) gesehen, zwei gesonderte Schneidbereiche (29, 30) vorgesehen sind, wobei, bevorzugt, ein Schneidbereich (28, 29, 30) einer Schneide (24, 25) eines Schalenteiles (3, 4) bzgl. des größten Öffnungsmaßes (d) des Schneidmauls (9) außermittig angeordnet ist.

5. Schneidgerät nach einem der vorhergehenden Ansprüche, **dadurch gekennzeichnet, dass** in jedem Schalenteil (3, 4) in Längsrichtung der Schalenteile (3, 4) vor und hinter der Schneide (24, 25) ein erster oder ein zweiter Führungsvorsprung (20, 21, 22, 23) vorgesehen ist.

6. Schneidgerät nach einem der vorhergehenden Ansprüche, **dadurch gekennzeichnet, dass** im geschlossenen Zustand der Schalenteile (3, 4) in Längsrichtung der Schalenteile (3, 4) gesehen eine Außenkontur des Schneidgerätes (1) eine kleinere Größenerstreckung (b) senkrecht zu der Mittelebene (M) aufweist als in Erstreckung quer zu der Längsrichtung.

7. Schneidgerät nach einem der vorhergehenden Ansprüche, **dadurch gekennzeichnet, dass** die Schalenteile (3, 4) um eine Schwenkachse (y) aus einer Offenstellung in eine Schließstellung und umgekehrt verschwenkbar sind, wobei, bevorzugt, die Schwenkachse (y) in Längsrichtung der Schalenteile (3, 4) verläuft und/ oder die Schwenkachse (y) in einem Verbindungsbereich (V) der zweiten oder ersten Längsränder (5, 6, 7, 8) der Schalenteile (3, 4) verläuft.

8. Schneidgerät nach Anspruch 7, **dadurch gekennzeichnet, dass** die Schalenteile (3, 4) auch im geöffneten Zustand des Schneidmauls (9) im Bereich der Schwenkachse (y) verbunden sind.

9. Schneidgerät nach einem der vorhergehenden Ansprüche, **dadurch gekennzeichnet, dass** die Randkanten (26, 27) der gegenüberliegenden Führungsvorsprünge (20, 21, 22, 23) unterschiedlich gekrümmt verlaufen, wobei der Radius (r, r') der einen gekrümmten Randkante (26) im Bereich der größten Krümmung um das 1,2- bis 10-Fache größer ist als der Radius (r") der anderen gekrümmten Randkante (27).

10. Schneidgerät nach einem der vorhergehenden Ansprüche, **dadurch gekennzeichnet, dass** eine erste Randkante (27) eines ersten Führungsvorsprunges (22, 23) einen gerade verlaufenden Flankenabschnitt (31, 32) aufweist, dass die zweite Randkante (26) eines zweiten Führungsabschnittes (20, 21) einen gekrümmten Verlauf aufweist, und dass der erste Führungsvorsprung (22, 23) bezogen auf die Mittelebene (M) dem zweiten Führungsvorsprunges (20, 21) gegenüberliegt.

11. Schneidgerät nach einem der vorhergehenden Ansprüche, **dadurch gekennzeichnet, dass** bezogen auf die Mittelebene (M) jedenfalls einer der Führungsvorsprünge (20, 21, 22, 23) bzgl. seiner beiden Endbereiche (30 - 36) mit unterschiedlichem Abstand (f) quer zu der Mittelebene (M) endet, wobei ein Endbereich (33, 34, 35, 36) unter Kreuzung der Mittelebene (M) auslaufend gestaltet sein kann.

12. Schneidgerät nach einem der Ansprüche 10 oder 11, **dadurch gekennzeichnet, dass** in jedem Schalenteil (3, 4) zwei erste bzw. zwei zweite Führungsvorsprünge (20, 21, 22, 23) vorgesehen sind.

13. Schneidgerät nach einem der vorhergehenden Ansprüche, **dadurch gekennzeichnet, dass** jeweils senkrecht zu einem Führungsvorsprung (22, 23) beabstandet und gleichgerichtet zu dem Führungsvorsprung (22, 23) verlaufend eine Schneide (24, 25) angeordnet ist.

14. Schneidgerät nach einem der Ansprüche 10 bis 13, **dadurch gekennzeichnet, dass** dem ersten Führungsvorsprung (22, 23) mit dem kleineren Krümmungsmaß zwei Schneidbereiche (29, 30) der Schneide (24, 25) zugeordnet sind.

15. Schneidgerät nach einem der Ansprüche 10 bis 14, **dadurch gekennzeichnet, dass** dem ersten Führungsvorsprung (22, 23) mit dem gerade verlaufenden Flankenabschnitt (31, 32) zwei Schneidbereiche (29, 30) der Schneide (24, 25) zugeordnet sind.

## Claims

1. Cutting device (1) for cutting corrugated pipes (2) to length, comprising cutting jaws (9) consisting of two jaw portions, the two jaw portions each having a blade (24, 25) and a guide projection (20, 21, 22, 23) which is perpendicularly spaced apart from the blade (24, 25) and extends in the same direction as the blade (24, 25), **characterised in that** the blades (24, 25), together with the guide projections (20, 21, 22, 23), are each formed in a longitudinal direction at the end of a shell part (3, 4) having a shell longitudinal axis, that first and second longitudinal edges (5 to 8) of each of the shell parts (3, 4) extend perpendicularly to an orientation of the blades (24, 25), that the cutting jaws (9), in the closed state, with respect to a central plane (M) of the cutting jaws (9) that extends through the first and second longitudinal edges (5 to 8), has a greatest opening dimension (d) in the extension direction of the central plane (M), that an extension dimension (a) of the shell parts (3, 4) in the longitudinal direction corresponds to 1.2 to 10 times the greatest opening dimension (d), and **in that** peripheral edges (26, 27) of the guide projections (20, 21, 22, 23) project beyond the cutting edges of the blades (24, 25) inwardly in the direction of the cutting jaws (9).

2. Cutting device according to claim 1, **characterised in that** blades (40, 41) which extend along the first or second longitudinal edges (5, 6, 7, 8) are formed on the first or second longitudinal edges (5, 6, 7, 8) of the shell parts (3, 4), which edges are opposite one another with respect to the central plane (M), for stripping cables.

3. Cutting device according to claim 2, **characterised in that**, further associated with the blades (40, 41), stripping blades (42, 43) for cables are also provided.

4. Cutting device according to any of the preceding claims, **characterised in that** two separate cutting regions (29, 30) are provided in one or both shell parts (3, 4) in the cutting jaws (9), viewed in the circumferential direction of the closed shell parts (3, 4), a cutting region (28, 29, 30) of a blade (24, 25) of a shell part (3, 4) preferably being arranged eccentrically with respect to the greatest opening dimension (d) of the cutting jaws (9).

5. Cutting device according to any of the preceding claims, **characterised in that** in each shell part (3, 4), a first or a second guide projection (20, 21, 22, 23) is provided in front of and behind the blade (24, 25) in the longitudinal direction of the shell parts (3, 4).

6. Cutting device according to any of the preceding claims, **characterised in that** in the closed state of the shell parts (3, 4), viewed in the longitudinal direction of the shell parts (3, 4), an outer contour of the cutting device (1) has a smaller dimension extension (b) perpendicular to the central plane (M) than in the extension transverse to the longitudinal direction.

7. Cutting device according to any of the preceding claims, **characterised in that** the shell parts (3, 4) can be pivoted about a pivot axis (y) from an open position into a closed position and vice versa, the pivot axis (y) preferably extending in the longitudinal direction of the shell parts (3, 4) and/or the pivot axis (y) preferably extending in a connection region (V) of the second or first longitudinal edges (5, 6, 7, 8) of the shell parts (3, 4).

8. Cutting device according to claim 7, **characterised in that** the shell parts (3, 4) are also connected in the region of the pivot axis (y) in the open state of the cutting jaws (9).

9. Cutting device according to any of the preceding claims, **characterised in that** the peripheral edges (26, 27) of the opposing guide projections (20, 21, 22, 23) are differently curved, the radius (r, r') of the one curved peripheral edge (26) in the region of the greatest curvature being 1.2 to 10 times greater than the radius (r") of the other curved peripheral edge (27).

10. Cutting device according to any of the preceding claims, **characterised in that** a first peripheral edge (27) of a first guide projection (22, 23) has a straight flank portion (31, 32), that the second peripheral edge (26) of a second guide portion (20, 21) has a curved profile, and **in that** the first guide projection (22, 23) is opposite the second guide projection (20, 21) with respect to the central plane (M).

11. Cutting device according to any of the preceding claims, **characterised in that**, with respect to the central plane (M), at least one of the guide projections (20, 21, 22, 23), with respect to the two end regions (30-36) thereof, ends at a different distance (f) transversely to the central plane (M) in any case, it being possible for an end region (33, 34, 35, 36) to be designed to end at the intersection with the central plane (M).

12. Cutting device according to either claim 10 or claim 11, **characterised in that** two first or two second guide projections (20, 21, 22, 23) are provided in each shell part (3, 4).

13. Cutting device according to any of the preceding claims, **characterised in that** a blade (24, 25) is in each case arranged so as to be perpendicularly spaced apart from a guide projection (22, 23) and extend in the same direction as the guide projection (22, 23).

14. Cutting device according to any of claims 10 to 13, **characterised in that** two cutting regions (29, 30) of the blade (24, 25) are associated with the first guide projection (22, 23) having the smaller degree of curvature.

15. Cutting device according to any of claims 10 to 14, **characterised in that** two cutting regions (29, 30) of the blade (24, 25) are associated with the first guide projection (22, 23) having the straight flank portion (31, 32).

## Revendications

1. Dispositif de coupe (1) pour couper des tubes ondulés (2) à longueur, avec une mâchoire de coupe (9) composée de deux parties de mâchoire, les deux parties de mâchoire comportant chacune une lame (24, 25) et chacune une saillie de guidage (20, 21, 22, 23) espacée perpendiculairement de la lame (24, 25) et s'étendant dans la même direction que la lame (24, 25), **caractérisé en ce que** les lames (24, 25) avec les saillies de guidage (20, 21, 22, 23) sont formées respectivement, dans une direction longitudinale, du côté de l'extrémité d'une partie de coque (3, 4) présentant un axe longitudinal de coque, **en ce que** des premier et deuxième bords longitudinaux (5 à 8) de chacune des parties de coque (3, 4) s'étendent perpendiculairement à une orientation des lames (24, 25), **en ce que** la mâchoire de coupe (9) présente à l'état fermé, par rapport à un plan médian (M) de la mâchoire de coupe (9) s'étendant à travers les premier et deuxième bords longitudinaux (5 à 8), une dimension d'ouverture maximale (d) dans la direction d'extension du plan médian (M), **en ce qu'**une dimension d'extension (a) des parties de coque (3, 4) dans la direction longitudinale correspond à 1,2 à 10 fois la plus dimension d'ouverture maximale (d) et **en ce que** des arêtes de coupe des lames (24, 25) sont dépassées vers l'intérieur en direction de la mâchoire de coupe (9) par des arêtes de bord (26, 27) des saillies de guidage (20, 21, 22, 23).

2. Dispositif de coupe selon la revendication 1, **caractérisé en ce que** sur les premiers ou deuxièmes bords longitudinaux (5, 6, 7, 8) des parties de coque (3, 4) opposés par rapport au plan médian (M) sont formés des lames (40, 41) s'étendant le long des premiers ou deuxièmes bords longitudinaux (5, 6, 7, 8) pour dénuder des câbles.

3. Dispositif de coupe selon la revendication 2, **caractérisé en ce que** des lames de dénudage (42, 43) pour câbles sont en outre associées aux lames (40, 41).

4. Dispositif de coupe selon l'une des revendications précédentes, **caractérisé en ce que**, vu dans la direction périphérique des parties de coque fermées (3, 4), deux zones de coupe séparées (29, 30) sont prévues dans l'une ou les deux parties de coque (3, 4) dans la mâchoire de coupe (9), dans lequel, de préférence, une zone de coupe (28, 29, 30) d'une lame (24, 25) d'une partie de coque (3, 4) est agencée de manière excentrée par rapport à la plus grande dimension d'ouverture (d) de la mâchoire de coupe (9).

5. Dispositif de coupe selon l'une des revendications précédentes, **caractérisé en ce qu'**une première ou une deuxième saillie de guidage (20, 21, 22, 23) est prévue dans chaque partie de coque (3, 4) en amont et en aval de la lame (24, 25) dans la direction longitudinale des parties de coque (3, 4).

6. Dispositif de coupe selon l'une des revendications précédentes, **caractérisé en ce que**, à l'état fermé des parties de coque (3, 4), vu dans la direction longitudinale des parties de coque (3, 4), un contour extérieur du dispositif de coupe (1) présente une extension dimensionnelle (b) plus petite perpendiculairement au plan médian (M) que dans l'extension transversalement à la direction longitudinale.

7. Dispositif de coupe selon l'une des revendications précédentes, **caractérisé en ce que** les parties de coque (3, 4) peuvent pivoter autour d'un axe de pivotement (y) d'une position ouverte à une position fermée et inversement, dans lequel, de préférence, l'axe de pivotement (y) s'étend dans la direction longitudinale des parties de coque (3, 4) et/ou l'axe de pivotement (y) s'étend dans une zone de liaison (V) des deuxièmes ou premiers bords longitudinaux (5, 6, 7, 8) des parties de coque (3, 4).

8. Dispositif de coupe selon la revendication 7, **caractérisé en ce que** les parties de coque (3, 4) sont également reliées dans la zone de l'axe de pivotement (y) lorsque la mâchoire de coupe (9) est ouverte.

9. Dispositif de coupe selon l'une des revendications précédentes, **caractérisé en ce que** les arêtes de bord (26, 27) des saillies de guidage opposées (20, 21, 22, 23) s'étendent avec des courbures différentes, dans lequel le rayon (r, r') de l'une des arêtes de bord (26) courbées est, dans la zone de la plus grande courbure, 1,2 à 10 fois plus grand que le rayon (r") de l'autre arête de bord courbée (27).

10. Dispositif de coupe selon l'une des revendications précédentes, **caractérisé en ce qu'**une première arête de bord (27) d'une première saillie de guidage (22, 23) présente une partie de flanc (31, 32) s'étendant de manière rectiligne, **en ce que** la deuxième arête de bord (26) d'une deuxième partie de guidage (20, 21) présente un tracé incurvé, et **en ce que** la première saillie de guidage (22, 23) est opposée à la deuxième saillie de guidage (20, 21) par rapport au plan médian (M).

11. Dispositif de coupe selon l'une des revendications précédentes, **caractérisé en ce que**, par rapport au plan médian (M), au moins l'une des saillies de guidage (20, 21, 22, 23) se termine par rapport à ses deux zones d'extrémité (30 - 36) à une distance (f) différente transversalement au plan médian (M), une zone d'extrémité (33, 34, 35, 36) pouvant être configurée de manière à se terminer en croisant le plan médian (M).

12. Dispositif de coupe selon l'une des revendications 10 ou 11, **caractérisé en ce que** deux premières, respectivement deux deuxièmes saillies de guidage (20, 21, 22, 23) sont prévues dans chaque partie de coque (3, 4).

13. Dispositif de coupe selon l'une des revendications précédentes, **caractérisé en ce qu'**une lame (24, 25) est agencée à chaque fois en étant espacée perpendiculairement d'une saillie de guidage (22, 23) et en s'étendant dans la même direction que la saillie de guidage (22, 23).

14. Dispositif de coupe selon l'une des revendications 10 à 13, **caractérisé en ce que** deux zones de coupe (29, 30) de la lame (24, 25) sont associées à la première saillie de guidage (22, 23) ayant la plus petite dimension de courbure.

15. Dispositif de coupe selon l'une des revendications 10 à 14, **caractérisé en ce que** deux zones de coupe (29, 30) de la lame (24, 25) sont associées à la première saillie de guidage (22, 23) présentant la portion de flanc (31, 32) s'étendant de manière rectiligne.
